# EUROPÄISCHE PATENTANMELDUNG

(11) **EP 2 650 174 A2**
(43) Veröffentlichungstag der Anmeldung: **16.10.2013**
(21) Anmeldenummer: 13162920.6
(22) Anmeldetag: 09.04.2013
(51) Int. Cl.: B60Q 1/26

(54) **Verfahren zum Steuern einer Beleuchtungsanordnung und Beleuchtungssystem**

(30) Priorität: 14.04.2012 DE 102012007592
(71) Anmelder: VOLKSWAGEN AG, 38440 Wolfsburg (DE)
(72) Erfinder: Hoppe, Stefan, 38444 Wolfsburg (DE)

(57) **Zusammenfassung**

Die vorliegende Erfindung betrifft ein Verfahren zum Steuern einer Beleuchtungsanordnung (8) für ein Fahrzeug (10), die mehrere Leuchten (1, 2, 3) für verschiedene Lichtfunktionen umfasst, wobei zumindest eine erste Leuchte (1) für eine erste Lichtfunktion so angeordnet ist, dass sie im eingeschalteten Zustand zumindest eine zweite Leuchte (2) für eine zweite Lichtfunktion thermisch beeinflusst. Das erfindungsgemäßen Verfahren ist dadurch gekennzeichnet, dass, wenn sich die erste Leuchte (1) in einem eingeschalteten Zustand befindet und ein Steuersignal zum Einschalten der zweiten Lichtfunktion erzeugt wird, die zweite Leuchte (2) so angesteuert wird, dass ihre Emissionsleistung im eingeschalteten Zustand geringer ist, als wenn sich die erste Leuchte (1) in einem ausgeschalteten Zustand befindet, oder die zweite Leuchte (2) eingeschaltet wird und die Emissionsleistung der ersten Leuchte verringert wird. Ferner betrifft die Erfindung ein Beleuchtungssystem zum Ausführen dieses Verfahrens sowie ein Verfahren mit einem solchen Beleuchtungssystem.

## Beschreibung

Die vorliegende Erfindung betrifft ein Verfahren zum Steuern einer Beleuchtungsanordnung für ein Fahrzeug. Die Beleuchtungsanordnung umfasst mehrere Leuchten für verschiedene Lichtfunktionen, wobei zumindest eine erste Leuchte für eine erste Lichtfunktion so angeordnet ist, dass sie im eingeschalteten Zustand zumindest eine zweite Leuchte für eine zweite Lichtfunktion thermisch beeinflusst. Ferner betrifft die Erfindung ein Beleuchtungssystem für ein Fahrzeug. Das Beleuchtungssystem weist die Beleuchtungsanordnung sowie ein Steuergerät zum Ein- und Ausschalten der Leuchten und zum Steuern der Emissionsleistung der Leuchten im eingeschalteten Zustand auf.

Die Beleuchtungsanordnungen eines Fahrzeugs tragen in zunehmenden Maße zum Design des Fahrzeugs bei. Durch die Gestaltung der Leuchten der Beleuchtungsanordnung soll dem Fahrzeug insbesondere ein charakteristisches Erscheinungsbild verliehen werden, welches leicht wiedererkannt wird und durch welches sich das Fahrzeug von dem Design anderer Fahrzeuge unterscheidet. Ferner machen es die Bauraumverhältnisse für die Leuchten, insbesondere für die Heckleuchten und Scheinwerfer, erforderlich, dass der Aufbau der Beleuchtungsanordnung mit den Leuchten sehr kompakt ist. Dabei werden insbesondere mehrere Leuchten für verschiedene Lichtfunktionen in einem Leuchtenmodul zusammengefasst.

Bei sehr kompakt aufgebauten Beleuchtungsanordnungen ergibt sich jedoch das Problem, dass die Abwärme eingeschalteter Leuchten zu einer hohen Wärmebelastung der Leuchtenbauteile führt. Aus diesem Grund wurden bei kompakt aufgebauten Beleuchtungsanordnungen hochtemperaturstabile Werkstoffe eingesetzt, um eine Beschädigung der Leuchtenbauteile durch die Wärmebelastung zu verhindern. Nachteilig an solchen hochtemperaturstabilen Werkstoffen ist es jedoch, dass sie die Kosten für die Herstellung der Beleuchtungsanordnung erheblich erhöhen.

Aus der DE 10 2007 020 319 A1 ist eine Sicherheitsschaltung für ein Leuchtmittel eines Fahrzeugs vorgesehen. Die Sicherheitsschaltung umfasst einen Helligkeits- und Temperatursensor, welche die Außenhelligkeit und/oder die Außentemperatur erfassen. Bei Überschreiten eines vorgegebenen Helligkeitswertes bzw. Temperaturwertes erzeugt die Sicherheitsschaltung ein Signal, das die Funktion einer Nebelschlussleuchte blockiert. Dadurch wird verhindert, dass an einem heißen Sommertag die Nebelschlussleuchte versehentlich eingeschaltet wird. Dies könnte nämlich zu einer hohen thermischen Beanspruchung der Nebelschlussleuchte führen und sie zerstören.

Ferner ist aus der DE 101 47 584 A1 eine Beleuchtungseinrichtung für Kraftfahrzeuge bekannt, welche Leuchten aufweist, die an Klappen angeordnet sind, die geöffnet werden können. Um in diesem Fall bei einer geöffneten Stellung der Klappe Überhitzungserscheinungen bei den bei der Klappe angeordneten Leuchten zu verhindern, wird bei dieser Beleuchtungseinrichtung beim Öffnen der Klappe das Leuchtmittel mit hoher Wärmeleistung für die Dauer der Öffnungsstellung automatisch in ihrer Leistung reduziert bzw. ausgeschaltet.

Der vorliegenden Erfindung liegt das technische Problem zu Grunde, ein Verfahren und ein Beleuchtungssystem der eingangs genannten Art bereitzustellen, bei denen auf kostengünstige Weise eine zu hohe thermische Belastung der Leuchten verhindert wird.

Erfindungsgemäß wird diese Aufgabe durch ein Verfahren mit den Merkmalen des Anspruchs 1 und ein Beleuchtungssystem mit den Merkmalen des Anspruchs 7 gelöst. Vorteilhafte Ausgestaltungen und Weiterbildungen ergeben sich aus den abhängigen Ansprüchen.

Das erfindungsgemäße Verfahren ist dadurch gekennzeichnet, dass, wenn sich die erste Leuchte in einem eingeschalteten Zustand befindet und ein Steuersignal zum Einschalten der zweiten Lichtfunktion erzeugt wird, die zweite Leuchte so angesteuert wird, dass ihre Emissionsleistung im eingeschalteten Zustand geringer ist, als wenn sich die erste Leuchte in einem ausgeschalteten Zustand befindet, oder die zweite Leuchte eingeschaltet wird und die Emissionsleistung der ersten Leuchte verringert wird.

Bei dem erfindungsgemäßen Verfahren werden die beiden Leuchten somit in Abhängigkeit von der Ansteuerung oder dem Zustand der jeweils anderen Leuchte gesteuert. Hierdurch kann auf kostengünstige Weise eine Überhitzung der Leuchten verhindert werden.

Die Emissionsleistung einer Leuchte im eingeschalteten Zustand hängt insbesondere direkt mit der ausgestrahlten Lichtintensität der Leuchte zusammen. Eine höhere Emissionsleistung führt zu einer helleren Leuchte und eine geringere Emissionsleistung führt zu einer nicht so hellen Leuchte. Unter einer Verringerung der Emissionsleistung wird im Sinne der Erfindung insbesondere verstanden, dass die Emissionsleistung geringer ist, als die Emissionsleistung der Leuchte für die jeweilige Lichtfunktion, wenn keine andere Lichtquelle eingeschaltet ist. Die Verringerung der Emissionsleistung kann dabei so weit gehen, dass die Leuchte auch vollständig abgeschaltet wird. Die Lichtfunktion wird dann von einer anderen Leuchte bereitgestellt.

Unter der thermischen Beeinflussung zweier Leuchten wird im Sinne der Erfindung verstanden, dass sich durch die Wärmeabstrahlung einer eingeschalteten Leuchte die Temperatur bei der anderen Leuchte erhöht. Für die Erhöhung kann ein Grenzwert definiert sein, welcher marginale Temperaturerhöhungen ausschließt. Dieser Grenzwert kann beispielsweise bei einigen Grad Celsius liegen. Des Weiteren kann auch berücksichtigt werden, ob sich die Temperaturerhöhung auch während des Fahrens mit dem Fahrzeug ergibt, in welchem die Beleuchtungsanordnung angeordnet ist.

Durch das erfindungsgemäße Verfahren wird somit ein Temperaturmanagement für zwei sich thermisch beeinflussende Leuchten einer Beleuchtungsanordnung bereitgestellt, welches allein auf der Ansteuerung der Leuchten beruht. Es ist somit nicht erforderlich spezielle hochtemperaturstabile Werkstoffe einzusetzen, die einer Schädigung der Leuchten bei hohen Temperaturen entgegenwirken. Eine Beleuchtungsanordnung, die auf diese Weise angesteuert wird, kann somit vergleichsweise kostengünstig hergestellt werden, sie ist jedoch gleichermaßen gegen eine Überhitzung der Leuchten geschützt, da auf Grund der Ansteuerung der Leuchten keine zu hohen Temperaturen auftreten.

Gemäß einer Ausgestaltung des erfindungsgemäßen Verfahrens wird die erste Leuchte ausgeschaltet, wenn die zweite Leuchte eingeschaltet wird. Die von der ersten Leuchte bereitgestellte Lichtfunktion kann in diesem Fall beispielsweise durch eine andere Leuchte bereitgestellt werden, welche thermisch nicht von der zweiten Leuchte beeinflusst wird und welche auch umgekehrt die zweite Leuchte thermisch nicht beeinflusst. Auf diese Weise ist es möglich, dass die zweite Leuchte mit der für die zweite Lichtfunktion erforderlichen Emissionsleistung betrieben wird, ohne dass es zu einer weiteren Erhitzung dieser Leuchte durch die Lichtemission der ersten Leuchte kommt. Eine Schädigung der zweiten Leuchte auf Grund einer zu hohen Wärmebelastung wird auf diese Weise vermieden.

Gemäß einer weiteren Ausgestaltung des erfindungsgemäßen Verfahrens wird die Emissionsleistung der ersten und/oder zweiten Leuchte so gewählt, dass die Temperatur in der ersten und/oder zweiten Leuchte einen Grenzwert nicht überschreitet. Dieser Grenzwert richtet sich insbesondere nach der thermischen Stabilität der Bauteile der Leuchte. Der Grenzwert wird so gewählt, dass es nicht zu einer Schädigung dieser Bauteile aufgrund einer zu hohen Temperaturbelastung kommt. Die Temperatur in der ersten bzw. zweiten Leuchte kann aus den Emissionsleistungen der Leuchten bestimmt werden. Hierbei kann insbesondere auf einen Speicher zugegriffen werden, welcher die Ergebnisse vorab durchgeführter Messungen enthält.

Diese Messungen können auch Daten zu verschiedenen Geschwindigkeiten des Fahrzeugs enthalten, so dass bei der Bestimmung der aktuellen Temperatur auch die aktuelle Fahrzeuggeschwindigkeit mit berücksichtigt wird. Des Weiteren ist es möglich die Temperatur zumindest in der ersten oder der zweiten Leuchte zu messen. Beim Einschalten der zweiten Leuchte wird dann die Emissionsleistung der ersten Leuchte nur dann reduziert oder die erste Leuchte wird nur dann ausgeschaltet, wenn die gemessene Temperatur einen Grenzwert überschritten hat. Gleichermaßen kann die Emissionsleistung der zweiten Leuchte nur dann geringer gewählt werden, wenn die gemessene Temperatur einen Grenzwert überschritten hat. Ferner ist es möglich, die Emissionsleistung der ersten und/oder zweiten Leuchte zu verringern, wenn sich während des Betriebs der beiden Leuchten ergibt, dass der Grenzwert überschritten wird. Dabei wird jedoch sichergestellt, dass die von den beiden Leuchten bereitgestellten Lichtfunktionen vollständig bereitgestellt werden können. Dies bedeutet gegebenenfalls, dass andere Leuchten zugeschaltet oder deren Lichtemission erhöht wird, wobei es hierdurch nicht zu einer Erwärmung der ersten und/oder zweiten Leuchte kommt.

Gemäß einer weiteren Ausgestaltung des erfindungsgemäßen Verfahrens weist die Beleuchtungsanordnung ein erstes Leuchtenmodul mit zumindest der ersten Leuchte für die erste Lichtfunktion und der zweiten Leuchte für die zweite Lichtfunktion sowie ein zweites Leuchtenmodul mit zumindest einer dritten Leuchte für die zweite Lichtfunktion auf. Die Leuchten des ersten Leuchtenmoduls beeinflussen dabei Leuchten des zweiten Leuchtenmoduls thermisch nicht. Ferner ist die zweite Lichtfunktion durch Einschalten der zweiten und dritten Leuchte bereitstellbar oder nur durch Einschalten der dritten Leuchte. Wenn bei dieser Ausgestaltung des erfindungsgemäßen Verfahrens sich die erste Leuchte des ersten Leuchtenmoduls in einem eingeschalteten Zustand befindet und ein Steuersignal zum Einschalten der zweiten Lichtfunktion erzeugt wird, bleibt die zweite Leuchte ausgeschaltet und die dritte Leuchte zum Bereitstellen der zweiten Lichtfunktion wird eingeschaltet. Wenn sich hingegen die erste Leuchte des ersten Leuchtenmoduls in einem ausgeschalteten Zustand befindet und ein Steuersignal zum Einschalten der zweiten Lichtfunktion erzeugt wird, werden die zweite und die dritte Leuchte zum Bereitstellen der zweiten Lichtfunktion eingeschaltet.

Bei dieser Ausgestaltung des Verfahrens wird somit die zweite Lichtfunktion entweder durch zwei Leuchten oder nur durch eine Leuchte bereitgestellt, und zwar in Abhängigkeit davon, ob die erste Leuchte, welche die zweite Leuchte thermisch beeinflusst, eingeschaltet ist oder nicht. Durch diese Ansteuerung der Leuchten wird erreicht, dass die gewünschten Lichtfunktionen bereitgestellt werden können, wobei jedoch eine zu hohe Wärmebelastung der Leuchten vermieden wird.

Bei der ersten Lichtfunktion handelt es sich insbesondere um ein Nebelschlusslicht eines Fahrzeugs. Bei der zweiten Lichtfunktion handelt es sich insbesondere um einen Rückfahrscheinwerfer. Ferner ist es möglich dass die erste Lichtfunktion ein Rückfahrscheinwerfer ist und die zweite Lichtfunktion ein Nebelschlusslicht. Das Nebelschlusslicht kann insbesondere so ausgelegt sein, dass zwei separate Leuchten für diese Lichtfunktion vorgesehen sind, wobei das Nebelschlusslicht sowohl nur von einer eingeschalteten Leuchte als auch von beiden eingeschalteten Leuchten bereitgestellt werden kann. Dabei bleibt die Lichtemission der Leuchten in jedem Fall in Einklang mit den Regularien für diese Lichtfunktion. Auf diese Weise kann der relativ selten auftretende Fall berücksichtigt werden, dass bei eingeschaltetem Nebelschlusslicht zusätzlich der Rückfahrscheinwerfer eingeschaltet werden soll. Der Rückfahrscheinwerfer wird in diesem Fall durch die dritte Leuchte bereitgestellt, welche die erste Leuchte für das Nebelschlusslicht thermisch nicht beeinflusst. Wenn hingegen das Nebelschlusslicht nicht eingeschaltet ist, kann der Rückfahrscheinwerfer auch von der zweiten und der dritten Leuchte bereitgestellt werden. Durch dieses Temperaturmanagement der Fahrzeugleuchten wird erreicht, dass für den seltenen Fall der gleichzeitigen Benutzung des Rückfahrlichts und des Nebelschlusslichts nicht besondere, kostenintensive hochtemperaturstabile Werkstoffe in den Leuchten eingesetzt werden müssen.

Des Weiteren ist es auch möglich, dass es sich bei den Lichtfunktionen um einen Fahrtrichtungsanzeiger, ein Schlusslicht oder ein Bremslicht des Fahrzeugs handelt, welche gemeinsam in Leuchtenmodulen integriert sind. Auch in diesem Fall kann durch eine geeignete Ansteuerung der Leuchten ein Temperaturmanagement erreicht werden, welches die Bereitstellung der Lichtfunktionen sicherstellt, jedoch eine Überhitzung der Leuchten verhindert.

Das erfindungsgemäße Beleuchtungssystem ist dadurch gekennzeichnet, dass mittels des Steuergeräts die Leuchten so ansteuerbar sind, dass, wenn sich die erste Leuchte in einem eingeschalteten Zustand befindet und ein Steuersignal zum Einschalten der zweiten Lichtfunktion erzeugt wird, die zweite Leuchte so angesteuert wird, dass ihre Emissionsleistung im eingeschalteten Zustand geringer ist, als wenn sich die erste Leuchte in einem ausgeschalteten Zustand befindet, oder die zweite Leuchte eingeschaltet wird und die Emissionsleistung der ersten Leuchte verringert wird. Das erfindungsgemäße Beleuchtungssystem ist insbesondere ausgebildet, um das vorstehend beschriebene erfindungsgemäße Verfahren durchzuführen. Es weist daher auch dieselben Vorteile wie das erfindungsgemäße Verfahren auf.

Gemäß einer weiteren Ausgestaltung des erfindungsgemäßen Beleuchtungssystems ist für die erste und zweite Leuchte jeweils ein separates Reflektorsystem angeordnet. Auch auf diese Weise wird die thermische Beeinflussung von benachbarten Leuchten verringert.

Gemäß einer weiteren Ausgestaltung des erfindungsgemäßen Beleuchtungssystems weist die Beleuchtungsanordnung ein erstes Leuchtenmodul mit zumindest der ersten Leuchte für die erste Lichtfunktion und der zweiten Leuchte für die zweite Lichtfunktion und ein zweites Leuchtenmodul mit zumindest einer dritten Leuchte für die zweite Lichtfunktion auf. Die Leuchten des ersten Leuchtenmoduls beeinflussen Leuchten des zweiten Leuchtenmoduls thermisch nicht. Ferner ist die zweite Lichtfunktion durch Einschalten der zweiten und dritten Leuchte bereitstellbar oder durch Einschalten nur der dritten Leuchte. Auf diese Weise ist es möglich, dass die zweite Lichtfunktion wahlweise nur von der dritten Leuchte oder von der zweiten und dritten Leuchte bereitgestellt wird. Hierdurch ist es möglich, dass die thermische Belastung des ersten Leuchtenmoduls verringert wird, wenn die erste Leuchte eingeschaltet ist.

Schließlich betrifft die vorliegende Erfindung ein Fahrzeug mit dem vorstehend beschriebenen Beleuchtungssystem.

Die Erfindung wird nun anhand eines Ausführungsbeispiels mit Bezug zu den Figuren erläutert.

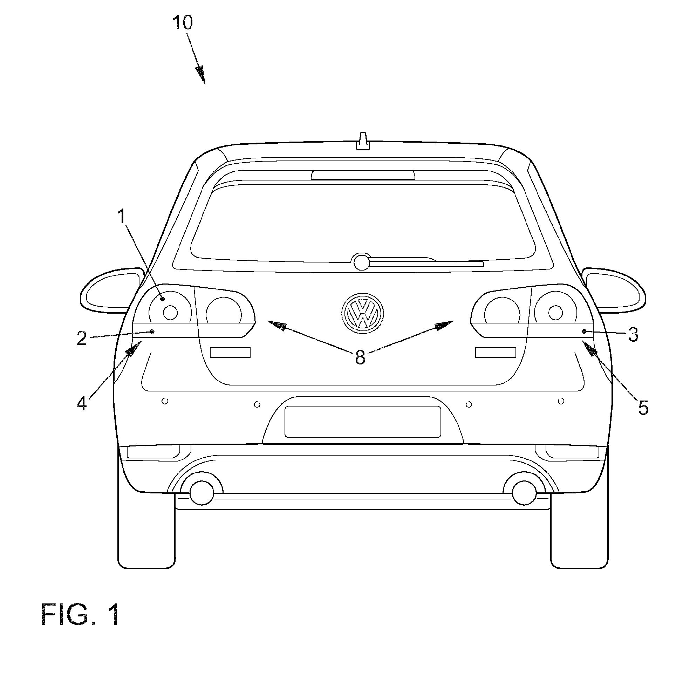

- Figur 1: zeigt ein Ausführungsbeispiel des erfindungsgemäßen Fahrzeuges von hinten,
- Figur 2: zeigt schematisch den Aufbau des erfindungsgemäßen Beleuchtungssystems und
- die Figuren 3 bis 7: zeigen unterschiedliche Zustände der Leuchten des Ausführungsbeispiels des erfindungsgemäßen Beleuchtungssystems, welche von einem Ausführungsbeispiel des erfindungsgemäßen Verfahrens erzeugt wurden.

Das Fahrzeug 10 umfasst eine an sich bekannte Beleuchtungsanordnung 8 mit einem linken Leuchtenmodul 4 mit einer ersten Leuchte 1 und einer zweiten Leuchte 2 sowie einem rechten Leuchtenmodul 5 mit einer dritten Leuchte 3. Die Leuchtenmodule 4 und 5 können noch weitere Leuchten umfassen, wie es an sich bekannt ist.

Die erste Leuchte 1 stellt die Lichtfunktion einer Nebelschlussleuchte bereit. Bei einer Nebelschlussleuchte handelt es sich um eine Leuchte, die dazu dient, das Fahrzeug von hinten durch ein rotes Signal von höherer Lichtstärke im Vergleich zu den Schlussleuchten besser sichtbar zu machen.

Bei der zweiten Lichtfunktion handelt es sich um die Lichtfunktion eines Rückfahrscheinwerfers. Bei einem Rückfahrscheinwerfer handelt es sich um eine Leuchte, die dazu dient, die Fahrbahn hinter dem Fahrzeug zu beleuchten und andere Verkehrsteilnehmer darauf aufmerksam zu machen, dass das Fahrzeug rückwärts fährt oder zum Rückwärtsfahren ansetzt. Die zweite Leuchte 2 und die dritte Leuchte 3 sind so ausgelegt, dass ein regelkonformer Rückfahrscheinwerfer bereitgestellt werden kann, wenn die Leuchten 2 und 3 gleichzeitig leuchten sowie auch dann, wenn nur die dritte Leuchte 3 leuchtet.

Es wäre außerdem möglich, dass das zweite Leuchtenmodul 5 z. B. eine vierte Leuchte aufweist, die auch ein Nebelschlusslicht bereitstellt. In diesem Fall kann sowohl das Nebelschlusslicht durch die erste Leuchte 1 und die vierte Leuchte symmetrisch bereitgestellt werden, als auch asymmetrisch nur von der ersten Leuchte 1 oder nur der vierten Leuchte. Gleichermaßen kann der Rückfahrscheinwerfer symmetrisch durch die zweite Leuchte 2 und die dritte Leuchte 3 bereitgestellt werden oder asymmetrisch nur durch die zweite Leuchte 2 oder nur durch die dritte Leuchte 3. In diesem Fall kann das Nebelschlusslicht und der Rückfahrscheinwerfer immer symmetrisch bereitgestellt werden, außer in dem Fall, bei dem sowohl die Lichtfunktion des Nebelschlusslichts als auch die Funktion des Rückfahrscheinwerfers eingeschaltet sind.

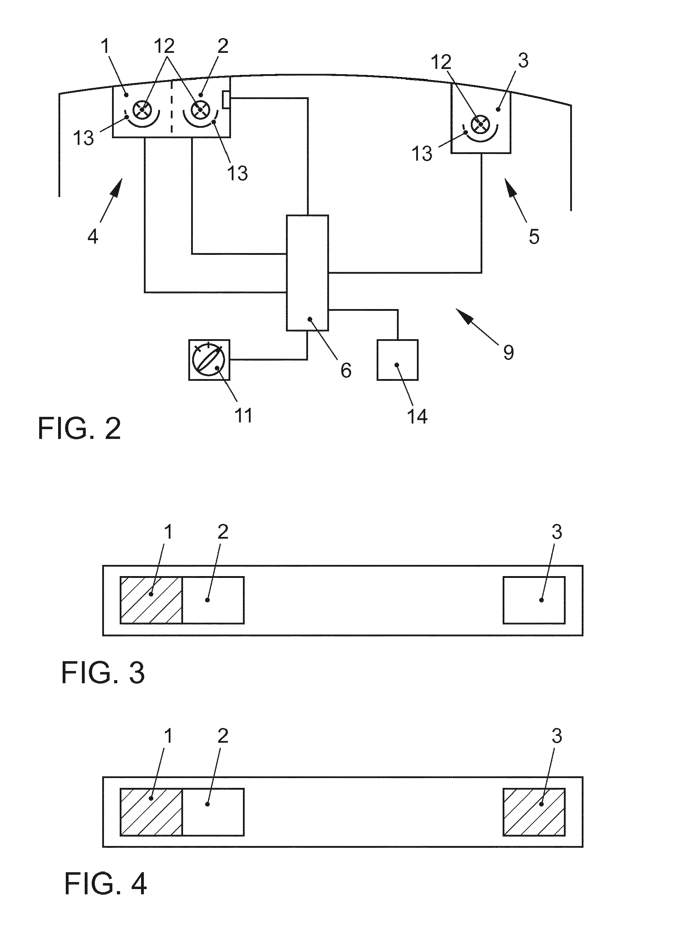

Mit Bezug zu Fig. 2 wird der Aufbau des Ausführungsbeispiels des erfindungsgemäßen Beleuchtungssystems 9 erläutert, welches in das Fahrzeug 10 integriert ist. Das Beleuchtungssystem 9 umfasst die vorstehend erläuterte Beleuchtungsanordnung 8 mit den Leuchten 1 bis 3. Diese Leuchten weisen jeweils eine separate Lichtquelle 12 sowie einen separaten Reflektor 13 auf. Die Leuchten 1 und 2 des ersten Leuchtenmoduls 4 sind so nah beieinander angeordnet, dass sie sich gegenseitig thermisch beeinflussen. Wenn die erste Leuchte 1 eingeschaltet ist, d. h. die Lichtquelle 12 dieser Leuchte 1 Licht emittiert, führt dies nicht nur zu einer Erwärmung im Inneren der ersten Leuchte 1, sondern auch zu einer Erwärmung der zweiten Leuchte 2. Wenn umgekehrt die zweite Leuchte 2 eingeschaltet ist, führt auch dies zu einer Erwärmung nicht nur der zweiten Leuchte 2, sondern auch der ersten Leuchte 1. Die dritte Leuchte 3 des zweiten Leuchtenmoduls 5 wird thermisch hingegen nicht von der ersten und der zweiten Leuchte 1, 2 beeinflusst. Selbst wenn das Fahrzeug 10 nicht fährt, erwärmt sich die dritte Leuchte 3 nicht, wenn die erste und/oder die zweite Leuchte 1, 2 eingeschaltet sind.

Die drei Leuchten 1 bis 3 der beiden Leuchtenmodule 4 und 5 sind elektrisch mit einem Steuergerät 6 verbunden. Mittels des Steuergeräts 6 werden die Lichtquellen 12 der Leuchten 1 bis 3 jeweils ein- und ausgeschaltet. Ferner kann die Emissionsleistung der Lichtquellen 12 der Leuchten 1 bis 3 jeweils von dem Steuergerät 6 gesteuert werden.

Das Steuergerät 6 ist ferner mit einem Schalter 11 verbunden, über welchen der Nutzer verschiedene Lichtfunktionen des Fahrzeugs 10 ein- und ausschalten kann. Die von dem Schalter 11 erzeugten Steuersignale setzt das Steuergerät 6 so um, dass die gewünschten Lichtfunktionen ein- und ausgeschaltet werden, wobei die spezielle Steuerung mittels des Steuergeräts 6 eine Überhitzung insbesondere der ersten und der zweiten Leuchte 1, 2 verhindert, wie es später erläutert wird.

Die Temperatur in zumindest einem Leuchtmodul 4, 5 kann ermittelt werden. Beispielsweise ist in dem ersten Leuchtenmodul 4 ein Sensor 7 vorgesehen, welcher die Temperatur in dem Gehäuse des ersten Leuchtenmoduls 4 erfasst. Der Messwert für diese Temperatur wird von dem Sensor 7 an das Steuergerät 6 übertragen, welches diesen Messwert weiter verarbeiten kann. Die Temperatur kann jedoch auch auf beliebige andere Weise bestimmt werden, beispielsweise mittels gespeicherter und vorab durchgeführter Messungen.

Des Weiteren ist das Steuergerät 6 mit einem Sensor 14 verbunden, welcher erfasst, wenn der Fahrer den Rückwärtsgang einlegt. In Abhängigkeit von dem Signal des Sensors 14 erzeugt das Steuergerät 6 ein Steuersignal zum Bereitstellen des Rückfahrscheinwerfers.

Im Folgenden wird ein Ausführungsbeispiel des erfindungsgemäßen Verfahrens mit Bezug zu den Fig. 3 bis 7 erläutert:

In den Fig. 3 bis 7 wird eine eingeschaltete Leuchte durch eine Schraffur dargestellt, eine ausgeschaltete Leuchte dadurch, dass keine Schraffur dargestellt ist und eine geringere Emissionsleistung der Leuchte durch eine Schraffur mit geringerer Strichdichte.

In Fig. 3 ist ein Ausgangszustand gezeigt, bei welcher die erste Leuchte 1 eingeschaltet ist und ein Nebelschlusslicht bereitstellt. Die zweite Leuchte 2 und die dritte Leuchte 3 sind ausgeschaltet.

Wenn nun der Fahrer den Rückwärtsgang einlegt, wird dies über den Sensor 14 erfasst und an das Steuergerät 6 übertragen. Von dem Steuergerät 6 wird nun ein Steuersignal zum Aktivieren der Lichtfunktion des Rückfahrscheinwerfers aktiviert. Da das Steuergerät 6 erfasst, dass die erste Leuchte 1 eingeschaltet ist, wird die Lichtfunktion des Rückfahrscheinwerfers dadurch erzeugt, dass die dritte Leuchte 3 eingeschaltet wird, die zweite Leuchte 2 hingegen ausgeschaltet bleibt, wie es in Fig. 4 dargestellt ist. Hierdurch wird sichergestellt, dass in dem Leuchtenmodul 4 nicht gleichzeitig die erste Leuchte 1 für das Nebelschlusslicht und die zweite Leuchte 2 für den Rückfahrscheinwerfer gleichzeitig eingeschaltet sind. In diesem Fall würde nämlich das Risiko bestehen, dass sich eine zu hohe Temperatur in dem ersten Leuchtenmodul 4 einstellt, wodurch Bauteile der Leuchten 1 und 2 beschädigt werden könnten.

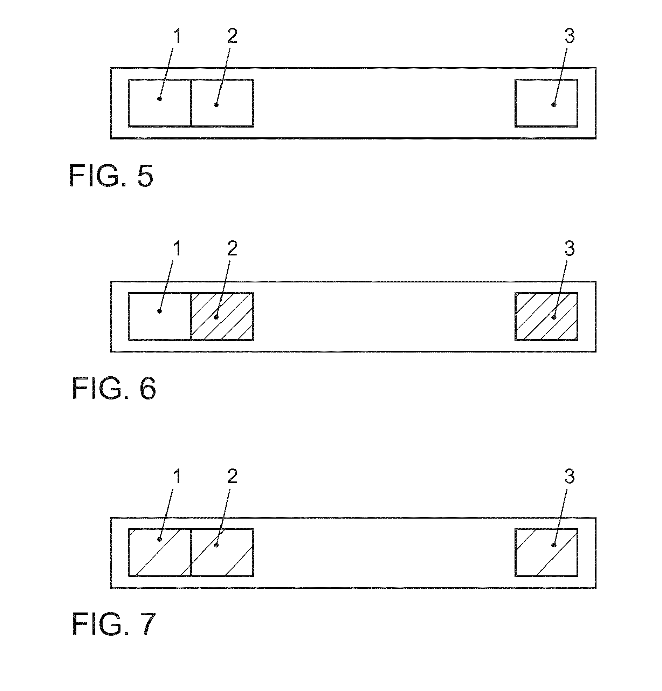

In Fig. 5 ist ein anderer Ausgangszustand gezeigt: In diesem Fall ist keine der Leuchten 1 bis 3 eingeschaltet. Wenn der Fahrer nun den Rückwärtsgang einlegt und das Steuergerät 6 Signale zum Bereitstellen der Rückfahrscheinwerfer erzeugt, werden sowohl die zweite Leuchte 2 als auch die dritte Leuchte 3 eingeschaltet, um die Lichtfunktion für den Rückfahrscheinwerfer bereitzustellen, wie es in Fig. 6 gezeigt ist. In diesem Fall besteht nämlich nicht das Risiko einer Überhitzung des ersten Leuchtemoduls 4.

In Fig. 7 ist eine alternative Ausgestaltung des erfindungsgemäßen Verfahrens gezeigt. Wenn ausgehend von dem in Fig. 3 gezeigten Zustand die Lichtfunktion der Rückfahrscheinwerfer erzeugt werden soll, kann auch die Emissionsleistung der zweiten Lichtquelle 2 geringer angesteuert werden, als in dem in Fig. 6 gezeigten Fall, bei dem die erste Lichtquelle 1 nicht eingeschaltet ist. Zusätzlich kann die dritte Lichtquelle 3 mit derselben Emissionsleistung angesteuert werden, wie die zweite Lichtquelle 2 um die Lichtfunktion des Rückfahrscheinwerfers bereitzustellen. Die erste Leuchte 1 kann entweder weiterhin mit derselben Emissionsleistung wie im Fig. 3 gezeigten Fall betrieben werden. Alternativ kann, wie in Fig. 7 gezeigt, die erste Lichtquelle 1 mit einer geringeren Emissionsleistung angesteuert werden, um eine Überhitzung des ersten Leuchtenmoduls 4 zu vermeiden.

Gemäß einem weiteren Ausführungsbeispiel kann das Steuergerät 6 die Emissionsleistungen der ersten Leuchte 1 und der zweiten Leuchte 2 in Abhängigkeit von der Temperatur in dem ersten Leuchtenmodul 4 steuern bzw. regeln. Diese Temperatur kann das Steuergerät 6 entweder auf Basis gespeicherter und vorab durchgeführter Messungen bestimmen. Ferner kann die Temperatur in dem ersten Leuchtenmodul von dem Sensor 7 gemessen und an das Steuergerät 6 übertragen werden. Das Steuergerät 6 regelt in diesem Fall die Temperatur in dem ersten Leuchtenmodul 4 so, dass ein bestimmter Grenzwert nicht überschritten wird. Die Höhe dieses Grenzwertes richtet sich nach der Temperaturstabilität der Bauteile der ersten Leuchteneinheit 4. Der Grenzwert wird insbesondere so gewählt, dass keine Bauteile der ersten Leuchteneinheit 4 durch eine zu hohe Temperaturbelastung geschädigt werden.

### Bezugszeichenliste

| | |
|---|---|
| 1 | erste Leuchte |
| 2 | zweite Leuchte |
| 3 | dritte Leuchte |
| 4 | erstes Leuchtenmodul |
| 5 | zweites Leuchtenmodul |
| 6 | Steuergerät |
| 7 | Sensor |
| 8 | Beleuchtungsanordnung |
| 9 | Beleuchtungssystem |
| 10 | Fahrzeug |
| 11 | Schalter |
| 12 | Lichtquelle |
| 13 | Reflektor |
| 14 | Sensor |

## Patentansprüche

1. Verfahren zum Steuern einer Beleuchtungsanordnung (8) für ein Fahrzeug (10), die mehrere Leuchten (1, 2, 3) für verschiedene Lichtfunktionen umfasst, wobei zumindest eine erste Leuchte (1) für eine erste Lichtfunktion so angeordnet ist, dass sie im eingeschalteten Zustand zumindest eine zweite Leuchte (2) für eine zweite Lichtfunktion thermisch beeinflusst,
**dadurch gekennzeichnet,**
**dass**, wenn sich die erste Leuchte (1) in einem eingeschalteten Zustand befindet und ein Steuersignal zum Einschalten der zweiten Lichtfunktion erzeugt wird, die zweite Leuchte (2) so angesteuert wird, dass ihre Emissionsleistung im eingeschalteten Zustand geringer ist, als wenn sich die erste Leuchte (1) in einem ausgeschalteten Zustand befindet, oder die zweite Leuchte (2) eingeschaltet wird und die Emissionsleistung der ersten Leuchte (1) verringert wird.

2. Verfahren nach Anspruch 1,
**dadurch gekennzeichnet,**
**dass** die erste Leuchte (1) ausgeschaltet wird, wenn die zweite Leuchte (2) eingeschaltet wird.

3. Verfahren nach Anspruch 1 oder 2,
**dadurch gekennzeichnet,**
**dass** die Emissionsleistung der ersten und/oder zweiten Leuchte (1, 2) so gewählt wird, dass die Temperatur in der ersten und/oder zweiten Leuchte (1, 2) einen Grenzwert nicht überschreitet.

4. Verfahren nach einem der vorhergehenden Ansprüche,
**dadurch gekennzeichnet, dass**
- die Beleuchtungsanordnung (8) ein erstes Leuchtenmodul (4) mit zumindest der ersten Leuchte (1) für die erste Lichtfunktion und der zweiten Leuchte (2) für die zweite Lichtfunktion und ein zweites Leuchtenmodul (5) mit zumindest einer dritten Leuchte (3) für die zweite Lichtfunktion aufweist, wobei Leuchten (1, 2) des ersten Leuchtenmoduls (4) Leuchten (3) des zweiten Leuchtenmoduls (5) thermisch nicht beeinflussen, und wobei die zweite Lichtfunktion durch Einschalten der zweiten und dritten Leuchte (2, 3) bereitstellbar ist oder durch Einschalten nur der dritten Leuchte (3), und,
- wenn sich die erste Leuchte (1) des ersten Leuchtenmoduls (4) in einem eingeschalteten Zustand befindet und ein Steuersignal zum Einschalten der zweiten Lichtfunktion erzeugt wird, die zweite Leuchte (2) ausgeschaltet bleibt und die dritte Leuchte (3) zum Bereitstellen der zweiten Lichtfunktion eingeschaltet wird.

5. Verfahren nach Anspruch 4,
**dadurch gekennzeichnet,**
**dass**, wenn sich die erste Leuchte (1) des ersten Leuchtenmoduls (4) in einem ausgeschalteten Zustand befindet und ein Steuersignal zum Einschalten der zweiten Lichtfunktion erzeugt wird, die zweite und die dritte Leuchte (2, 3) zum Bereitstellen der zweiten Lichtfunktion eingeschaltet werden.

6. Verfahren nach einem der vorhergehenden Ansprüche,
**dadurch gekennzeichnet,**
**dass** die erste Lichtfunktion ein Nebelschlusslicht ist und die zweite Lichtfunktion ein Rückfahrscheinwerfer ist oder dass die erste Lichtfunktion ein Rückfahrscheinwerfer ist und die zweite Lichtfunktion ein Nebelschlusslicht ist.

7. Beleuchtungssystem (9) für ein Fahrzeug (10) mit
- einer Beleuchtungsanordnung (8), die mehrere Leuchten (1, 2, 3) für verschiedene Lichtfunktionen umfasst, wobei zumindest eine erste Leuchte (1) für eine erste Lichtfunktion so angeordnet ist, dass sie im eingeschalteten Zustand zumindest eine zweite Leuchte (2) für eine zweite Lichtfunktion thermisch beeinflusst, und
- einem Steuergerät (6) zum Ein- und Ausschalten der Leuchten (1, 2, 3) und zum Steuern der Emissionsleistung der Leuchten (1, 2, 3) im eingeschalteten Zustand,
**dadurch gekennzeichnet, dass**
- mittels des Steuergeräts (6) die Leuchten (1, 2, 3) so ansteuerbar sind, dass, wenn sich die erste Leuchte (1) in einem eingeschalteten Zustand befindet und ein Steuersignal zum Einschalten der zweiten Lichtfunktion erzeugt wird, die zweite Leuchte (2) so angesteuert wird, dass ihre Emissionsleistung im eingeschalteten Zustand geringer ist, als wenn sich die erste Leuchte (1) in einem ausgeschalteten Zustand befindet, oder die zweite Leuchte (2) eingeschaltet wird und die Emissionsleistung der ersten Leuchte (1) verringert wird.

8. Beleuchtungssystem (9) nach Anspruch 7,
**dadurch gekennzeichnet,**
**dass** für die erste und zweite Leuchte (1, 2) jeweils ein separates Reflektorsystem (13) angeordnet ist.

9. Beleuchtungssystem (9) nach Anspruch 7 oder 8
**dadurch gekennzeichnet,**
**dass** die Beleuchtungsanordnung (8) ein erstes Leuchtenmodul (4) mit zumindest der ersten Leuchte (1) für die erste Lichtfunktion und der zweiten Leuchte (2) für die zweite Lichtfunktion und ein zweites Leuchtenmodul (5) mit zumindest einer dritten Leuchte (3) für die zweite Lichtfunktion aufweist, wobei Leuchten (1, 2) des ersten Leuchtenmoduls (4) Leuchten (3) des zweiten Leuchtenmoduls (5) thermisch nicht beeinflussen und wobei die zweite Lichtfunktion durch Einschalten der zweiten und dritten Leuchte (2, 3) bereitstellbar ist oder durch Einschalten nur der dritten Leuchte (3).

10. Fahrzeug (10) mit einem Beleuchtungssystem (9) nach einem der Ansprüche 7 bis 9.
